# EUROPÄISCHE PATENTSCHRIFT

(11) **EP 3 984 124 B1**
(45) Veröffentlichungstag und Bekanntmachung des Hinweises auf die Patenterteilung: **08.04.2026**
(21) Anmeldenummer: 20728714.5
(22) Anmeldetag: 25.05.2020
(51) Int. Cl.: H02M 1/42, H02M 5/458, H02M 7/493, H02M 7/797

(54) **DUAL PURPOSE CONVERTER**
DUAL PURPOSE CONVERTER
CONVERTISSEUR À DOUBLE USAGE

(30) Priorität: 14.06.2019 DE 102019116277
(43) Veröffentlichungstag der Anmeldung: 20.04.2022
(73) Patentinhaber: Wobben Properties GmbH, 26607 Aurich (DE)
(72) Erfinder: HEYEN, Christian, 26607 Aurich (DE)
(74) Vertreter: Eisenführ Speiser
(86) Internationale Anmeldenummer: PCT/EP2020/064452
(87) Internationale Veröffentlichungsnummer: WO 2020/249385

(56) Entgegenhaltungen:
- US-A1- 2005 201 127
- CHEN GEN ET AL: "Reconfigurable Control for Fault-Tolerant of Parallel Converters in PMSG Wind Energy Conversion System", IEEE TRANSACTIONS ON SUSTAINABLE ENERGY, IEEE, USA, vol. 10, no. 2, 1 April 2019 (2019-04-01), pages 604 - 614, XP011715495, ISSN: 1949-3029, [retrieved on 20190319], DOI: 10.1109/TSTE.2018.2841018

## Beschreibung

Die vorliegende Erfindung betrifft einen Leistungsstromrichter, insbesondere einer Windenergieanlage zum Einspeisen elektrischer Leistung in ein elektrisches Versorgungsnetz, sowie einen Zentralumrichter einer Windenergieanlage als auch eine, einen solchen Leistungsstromrichter oder Zentralumrichter aufweisende Windenergieanlage.

Erzeuger elektrischer Energie, wie bspw. Windenergieanlagen, speisen üblicherweise ihre erzeugte elektrische Leistung mittels eines Leistungsstromrichters in das elektrische Versorgungsnetz ein.

Der Leistungsstromrichter hat dabei insbesondere die Aufgabe, den von dem Erzeuger elektrischer Energie erzeugten elektrischen Strom derart zu richten, dass der elektrische Strom etwaige Kriterien des elektrischen Versorgungsnetzes erfüllt, wie beispielsweise 50-Hz-Wechselstrom.

Unter einem Leistungsstromrichter sind also insbesondere Vorrichtungen zu verstehen, die Gleichrichter und/oder Wechselrichter und/oder Umrichter aufweisen, welche dazu eingerichtet sind, Ströme von mehreren hundert Ampere bis hin zu mehreren Kilo-Ampere zu führen und/oder zu wandeln. Ein Beispiel für solche Leistungsstromrichter sind Frequenzwechselrichter einer Windenergieanlage, die im Falle eines Vollumrichterkonzeptes auch als Zentralumrichter bezeichnet werden können.

Mit den zunehmenden Leistungsklassen der Erzeuger elektrischer Energie nehmen auch die Leistungsklassen der Leistungsstromrichter und damit deren Baugrößen stetig zu.

Im Bereich der Windenergieanlagen kann dies bspw. aufgrund der beschränkten Gondelgrößen zu Problemen führen.

Darüber hinaus werden durch die zunehmende Penetration des elektrischen Versorgungsnetzes mit regenerativen Erzeugern immer komplexere Anforderungen an sämtliche Erzeuger eines elektrischen Versorgungsnetzes seitens der Netzbetreiber gestellt. So fordern Netzbetreiber bspw., dass Erzeuger einen Spannungseinbruch durchfahren können müssen.

Solche Anforderungen werden zumeist durch zusätzliche Betriebsmodi und/oder Bauteile erfüllt, wobei dies ebenfalls zu einer Vergrößerung der Leistungselektronik führt.

Das Deutsche Patent- und Markenamt hat in der Prioritätsanmeldung zur vorliegenden Anmeldung folgenden Stand der Technik recherchiert: DE 10 2011 079 214 A1, DE 10 2014 219 909 A1 und DE 10 2017 120 298 A1.

Dokument Chen GEN et al.: "Reconfigurable Control for Fault-Tolerant of Parallel Converters in PMSG Wind Energy Conversion System", IEEE TRANSACTIONS ON SUSTAINABLE ENERGY, IEEE, USA, Bd. 10, Nr. 2, 1. April 2019 (2019-04-01 ), Seiten 604-614, XP011715495, ISSN: 1949-3029, DOI: 10.1109/TSTE.2018.2841018 betrifft eine Windenergieanlage mit einer permant-erregten Synchronmaschine.

US 2005/0201127 A1 betrifft eine unterbrechungsfreie Stromversorgung.

Aufgabe der vorliegenden Erfindung ist es daher, zumindest eines der oben genannten Probleme zu adressieren, den allgemeinen Stand der Technik zu verbessern oder eine Alternative zu bisher Bekanntem bereitzustellen. Insbesondere soll ein Leistungsstromrichter bereitgestellt werden, welcher unterschiedlichsten Betriebszuständen und/oder Anforderungen seitens der Netzbetreiber bei nur geringem Bauvolumen gerecht wird.

Die vorliegende Erfindung bezieht sich auf einen Leistungsstromrichter gemäß Anspruch 1 und einen Zentralumrichter einer Windenergieanlage gemäß Anspruch 2. Vorteilhafte Ausführungsformen sind in den abhängigen Ansprüchen definiert.

Erfindungsgemäß wird somit ein Leistungsstromrichter, insbesondere einer Windenergieanlage zum Einspeisen einer elektrischen Leistung in ein elektrisches Versorgungsnetz, vorgeschlagen, wenigstens umfassend eine Vielzahl von Gleichrichtern, die mit einem ersten Wechselspannungsnetz verbindbar sind, um eine erste Wechselspannung in eine Gleichspannung umzuwandeln, einen, mit der Vielzahl von Gleichrichtern verbundenen Gleichspannungszwischenkreis, der dazu eingerichtet ist, die Gleichspannung zu führen und eine Vielzahl von Wechselrichtern, die mit dem Gleichspannungszwischenkreis verbunden sind und mit einem zweiten Wechselspannungsnetz verbindbar sind, um die Gleichspannung in zweite Wechselspannung umzuwandeln, und ein schaltbares Umrichtermodul, wenigstens umfassend: einen, mit dem Gleichspannungszwischenkreis verbundenen Umrichter und eine, mit dem Umrichter verbundene Schalteinheit, die mit dem ersten und dem zweiten Wechselspannungsnetz verbindbar ist und so mit dem ersten Wechselspannungsnetz verbunden werden kann, dass der Umrichter als Gleichrichter ausgebildet ist, und - so mit dem zweiten Wechselspannungsnetz verbunden werden kann, dass der Umrichter als Wechselrichter ausgebildet ist.

Es wird somit insbesondere ein Leistungsstromrichter einer Windenergieanlage in Form eines Frequenzumrichters bzw. eines Frequenzwechselrichters (engl.: AC-AC converter) vorgeschlagen.

Der Leistungsstromrichter weist zusätzlich zu den üblichen Gleichrichtern, dem üblichen Gleichspannungszwischenkreis und den üblichen Wechselrichtern ein schaltbares Umrichtermodul auf.

Das schaltbare Umrichtermodul umfasst dabei wenigstens einen mit dem Gleichspannungszwischenkreis verbundenen Umrichter und eine mit dem Umrichter verbundene Schalteinheit.

Der Umrichter ist dabei ferner dazu eingerichtet, sowohl als Gleichrichter als auch als Wechselrichter betrieben zu werden.

Es wird also insbesondere vorgeschlagen, dass der Leistungsstromrichter wenigstens einen Umrichter aufweist, der sowohl als Gleichrichter als auch als Wechselrichter arbeiten bzw. betrieben werden kann.

In einer besonders bevorzugten Ausführungsform ist der Umrichter ferner dazu eingerichtet, im laufenden Betrieb zwischen einer Funktion: Gleichrichter und einer Funktion: Wechselrichter zu wechseln. Dies kann bspw. mittels einer nachstehend beschriebenen Schalteinheit erfolgen.

Es wird also insbesondere auch vorgeschlagen, den Umrichter im laufenden Betrieb je nach Bedarf als Gleichrichter oder als Wechselrichter zu betreiben.

So kann es beispielsweise sein, dass in einem Betriebszustand des Leistungsstromrichters mehr Scheinleistung bzw. Strom aus dem ersten Wechselspannungsnetz umgewandelt werden muss als Scheinleistung bzw. Strom aus dem Gleichspannungszwischenkreis in das zweite Wechselspannungsnetz umgewandelt werden muss.

In solchen Fällen wird nun vorgeschlagen, den Umrichter mittels der Schalteinheit so mit dem ersten Wechselspannungsnetz zu verbinden, dass der Umrichter als Gleichrichter ausgebildet ist.

In anderen Fällen wiederum kann es abhängig vom Betriebszustand dazu kommen, dass mehr Scheinleistung bzw. Strom aus dem Gleichspannungszwischenkreis in das zweite Wechselspannungsnetz umgewandelt werden muss als Scheinleistung bzw. Strom aus dem ersten Wechselspannungsnetz in den Gleichspannungszwischenkreis umgewandelt werden muss.

In solchen Fällen wird nun vorgeschlagen, dass der Umrichter mittels der verbundenen Schalteinheit so mit dem zweiten Wechselspannungsnetz verbunden wird, dass der Umrichter als Wechselrichter ausgebildet ist.

Bspw. weist der Leistungsstromrichter vier Gleichrichter und vier Wechselrichter auf sowie ein schaltbares Umrichtermodul mit zwei Umrichtern und zwei Schalteinheiten.

Demnach ist es erfindungsgemäß möglich, den Leistungsstromrichter so zu betreiben, dass der Leistungsstromrichter sechs Gleichrichter und vier Wechselrichter aufweist oder fünf Gleichrichter und fünf Wechselrichter aufweist oder vier Gleichrichter und sechs Wechselrichter aufweist.

In einer besonders bevorzugten Ausführungsform weisen die Gleichrichter, die Wechselrichter und die Umrichter des schaltbaren Umrichtermoduls im Wesentlichen dieselbe Leistungsklasse auf.

Vorzugsweise umfasst der Leistungsstromrichter ferner eine Steuereinheit, die dazu eingerichtet ist, die Schalteinheit dynamisch zu schalten und/oder den Umrichter als Gleichrichter und als Wechselrichter zu betreiben.

Es wird also insbesondere eine Steuereinheit vorgeschlagen, die dazu eingerichtet ist, die vorstehend oder nachstehend beschriebene Schalteinheit dynamisch so zu schalten, dass die Umrichter des schaltbaren Umrichtermoduls im laufenden Betrieb des Leistungsstromrichters je nach Bedarf als Gleichrichter oder als Wechselrichter arbeiten.

Es wird ferner insbesondere auch vorgeschlagen, dass die Schalteinheit dazu eingerichtet ist, den Umrichter des schaltbaren Umrichtermoduls als Gleichrichter und/oder als Wechselrichter zu betreiben.

Vorzugsweise weist das schaltbare Umrichtermodul, insbesondere genau, zwei Umrichter und zwei Schalteinheiten auf, wobei die Umrichter zeitgleich als Gleichrichter und/oder Wechselrichter betreibbar sind.

Das schaltbare Umrichtermodul weist somit insbesondere genau zwei Umrichter und zwei Schalteinheiten auf, wobei jeweils eine Schalteinheit einem Umrichter zugeordnet ist.

Zudem sind die Umrichter zeitgleich als Gleichrichter und/oder als Wechselrichter betreibbar.

Dies bedeutet insbesondere auch, dass die Umrichter sowohl beide als Gleichrichter als auch beide als Wechselrichter betreibbar sind und dass die Umrichter auch jeweils als ein Gleichrichter und jeweils als ein Wechselrichter betreibbar sind.

Vorzugsweise umfasst der Leistungsstromrichter wenigstens zwei schaltbare Umrichtermodule.

Es wird ferner somit auch vorgeschlagen, dass der Leistungsstromrichter mehrere vorstehend oder nachstehend beschriebene umschaltbare Umrichtermodule aufweist.

In einer bevorzugten Ausführungsform weist jedes dieser schaltbaren Umrichtermodule genau zwei Umrichter und zwei Schalteinheiten auf, wobei die Umrichter zeitgleich als Gleichrichter und/oder als Wechselrichter betreibbar sind.

Vorzugsweise weist der Leistungsstromrichter eine Vielzahl von Drosseln auf, die im Wesentlichen dieselbe Größenordnung aufweisen.

Es wird also ferner auch vorgeschlagen, dass der Leistungsstromrichter eine Vielzahl von Drosseln aufweist, die an den Eingängen der Gleichrichter bzw. an den Ausgängen der Wechselrichter angeordnet sind und die an den Ein- bzw. Ausgängen der Umrichter der schaltbaren Umrichtermodule angeordnet sind.

In einer besonders bevorzugten Ausführungsform weisen diese Drosseln im Wesentlichen dieselbe Größenordnung auf, bevorzugt im Bereich zwischen 100 und 1000 Mikro-Henry, besonders bevorzugt im Bereich zwischen 200 und 800 Mikro-Henry, besonders bevorzugt im Wesentlichen 400 Mikro-Henry.

Erfindungsgemäß wird ferner auch ein Zentralumrichter einer Windenergieanlage vorgeschlagen umfassend eine Vielzahl von schaltbaren Umrichtermodulen, wobei jedes schaltbare Umrichtermodul wenigstens umfasst: einen, mit einem Gleichspannungszwischenkreis verbundenen Umrichter und eine, mit dem Umrichter verbundene Schalteinheit, die mit einem ersten und einem zweiten Wechselspannungsnetz verbindbar ist und so mit dem ersten Wechselspannungsnetz verbunden werden kann, dass der Umrichter als Gleichrichter ausgebildet ist, und so mit dem zweiten Wechselspannungsnetz verbunden werden kann, dass der Umrichter als Wechselrichter ausgebildet ist.

Es wird somit insbesondere ein Zentralumrichter einer Windenergieanlage vorgeschlagen, wie er beispielsweise bei Vollumrichterkonzepten einer Windenergieanlage zur Anwendung kommt.

Der Zentralumrichter weist im Wesentlichen eine Vielzahl von schaltbaren Umrichtermodulen auf, wie vorstehend oder nachstehend beschrieben.

Demnach wird insbesondere vorgeschlagen, dass die einzelnen Umrichter des Zentralumrichters jeweils sowohl als Gleichrichter als auch als Wechselrichter betrieben werden können.

Der Unterschied zwischen dem hierin vorgeschlagenen Zentralumrichter und dem hierin vorgeschlagenen Leistungsstromrichter besteht also insbesondere darin, dass sämtliche Umrichtermodule des Zentralumrichters dynamisch an die Betriebszustände angepasst werden können, hingegen der Leistungsstromrichter eine Vielzahl von Gleichrichtern und Wechselrichtern aufweist, denen nur diese eine Funktion zukommt, nämlich als Gleichrichter bzw. als Wechselrichter ausgebildet zu sein.

Besonders vorteilhaft an einem solchen erfindungsgemäßen Zentralumrichter einer Windenergieanlage ist insbesondere, dass der Zentralumrichter dazu eingerichtet ist, sämtliche Betriebszustände, die von einem Betreiber eines elektrischen Versorgungsnetzes gefordert sein können, jederzeit durchfahren zu können, insbesondere bei verhältnismäßig kleiner Baugröße des Zentralumrichters.

Es wurde nämlich erfindungsgemäß erkannt, dass bei einem solchen Aufbau eines Zentralumrichters bis zu 10% Leistungselektronik eingespart werden können.

Erfindungsgemäß wird ferner auch eine Windenergieanlage vorgeschlagen wenigstens umfassend einen Generator zum Erzeugen einer Wechselspannung, einen Leistungsstromrichter oder einen Zentralumrichter, wie vorstehend oder nachstehend beschrieben, der mit dem Generator verbunden ist, und eine Steuerung, die dazu eingerichtet ist, das schaltbare Umrichtermodul im laufenden Betrieb der Windenergieanlage so dynamisch zu schalten, dass der Umrichter als Gleichrichter und/oder als Wechselrichter betrieben wird.

Im Falle eines vorstehend oder nachstehend beschriebenen Zentralumrichters, ist es somit auch möglich, dass die Windenergieanlage alle Umrichter netzseitig schaltet, um so in einem STATCOM-Betrieb zu arbeiten, also mit doppelten Blindleistungsstellbereich. Die Windenergieanlage ist dann quasi als STATCOM ausgebildet.

Vorzugsweise weist die Windenergieanlage unterschiedliche Betriebsarten auf, wobei die Steuerung in Abhängigkeit dieser Betriebsarten das schaltbare Umrichtermodul schaltet.

Es wird also insbesondere auch vorgeschlagen, dass die Windenergieanlage dazu eingerichtet ist, unterschiedliche Betriebsarten aufzuweisen, wie beispielsweise einen:
- schalloptimierten Betrieb,
- Powerboost,
- erweiterten Q-Stellbereich,
- Netzunterspannung,
- usw.

Der schalloptimierte Betrieb beschreibt einen Betrieb, in dem die Windenergieanlage mit einer reduzierten Drehzahl betrieben wird, um die Schallemissionen der Rotorblätter zu reduzieren. Damit einhergehend reduziert sich die induzierte Spannung an den Generatorklemmen, was nur im eingeschränkten Maße durch eine höhere elektrische Erregung des Rotors kompensiert werden kann. Um trotzdem möglichst viel Leistung ins Netz speisen zu können, wird entsprechend viel Strom auf der Seite des Gleichrichters benötigt. Der netzseitige Wechselrichter hingegen ist davon nicht beeinflusst, da sich ab dem Zwischenkreis die normalen Verhältnisse einstellen. Durch einen solchen Betrieb wird üblicherweise mehr Umrichterkapazität auf der Gleichrichterseite benötigt.

Der Powerboost beschreibt einen Betrieb, in dem die Windenergieanlage eine kurzzeitige Einspeisung von Wirkleistung über die Nennwirkleistung der Windenergieanlage hinaus ausführt. Dies geschieht zum Teil unter Ausnutzung thermischer Zeitkonstanten (z.B. beim Generator). Bei Umrichtern, insbesondere Halbleitern, ist dies nicht möglich, da die Zeitkonstanten im unteren Millisekunden-Bereich liegen. Netzseitig kann als Kompromiss die Einspeisung von Blindleistung reduziert werden. Generatorseitig besteht diese Möglichkeit nicht. Durch einen solchen Betrieb wird mehr Umrichterkapazität auf der Gleichrichterseite benötigt.

Der erweiterte Q-Stellbereich beschreibt einen Betrieb, in dem die Windenergieanlage mit erweitertem Blindleistungsstellbereich gefahren wird, um zum Beispiel den Blindleistungsbedarf von Industrieanlagen (z.B. mit Induktionsheizungen) zu kompensieren und kann als eine Alternative zu STATCOM-Anlagen verstanden werden. Die Bereitstellung der netzseitigen Blindleistung hat keinen Einfluss auf den Gleichrichter. Durch einen solchen Betrieb wird mehr Umrichterkapazität auf der Wechselrichterseite benötigt.

Die Netzunterspannung beschreibt einen Betrieb, in dem die Netzspannung einen gewissen Wert unterhalb der nominalen Netzspannung unterschreitet, wodurch die Windenergieanlage nicht mehr die volle Scheinleistung bereitstellen kann, da die Stromgrenzen der netzseitigen Wechselrichter erreicht werden. Um Ertragsausfälle oder den reduzierten Blindleistungsstellbereich zu reduzieren, ist also ein größerer Nennstrom auf der Netzseite notwendig. Auf die Gleichrichter hat die Netzspannung keinen Einfluss. Durch einen solchen Betrieb wird mehr Umrichterkapazität auf Wechselrichterseite benötigt.

Es wurde also erfindungsgemäß auch erkannt, dass je nach Betrieb der Windenergieanlage die benötigten Kapazitäten an Gleich- und Wechselrichtern unterschiedlich verteilt sein können. Genau für diese Zwecke kann das schaltbare Umrichtermodul sowohl als Gleichrichter als auch als Wechselrichter verwendet werden, insbesondere je nach Bedarf verwendet werden.

Es wird somit insbesondere auch vorgeschlagen, dass schaltbaren Umrichtermodule im laufenden Betrieb der Windenergieanlage in Abhängigkeit von Betriebsarten umgeschaltet werden, so sind beispielsweise folgende Zuordnungen bei einer Konfiguration mit zwölf Gleichrichtern, zwölf Wechselrichtern und einem schaltbaren Umrichtermodul mit zwei Umrichtern denkbar: 14 Gleichrichter, 12 Wechselrichter; 13 Gleichrichter, 13 Wechselrichter; 12 Gleichrichter, 14 Wechselrichter.

Vorzugsweise umfassen die Betriebsarten wenigstens einen schalloptimierten Betrieb und/oder einen Netzfehlerbetrieb.

Es wird somit insbesondere vorgeschlagen, dass die Windenergieanlage wenigstens einen schalloptimierten Betrieb und/oder einen Netzfehlerbetrieb aufweist.

Diese können beispielsweise in der Steuerung der Windenergieanlage implementiert sein, die bevorzugt auf die Schalteinheiten der schaltbaren Umrichtermodule wirkt.

Der schalloptimierte Betrieb beschreibt einen Betrieb, in dem die Windenergieanlage mit einer reduzierten Drehzahl betrieben wird, um die Schallemissionen der Rotorblätter zu reduzieren. Damit einhergehend reduziert sich die induzierte Spannung an den Generatorklemmen, was nur im eingeschränkten Maße durch eine höhere elektrische Erregung des Rotors kompensiert werden kann. Um trotzdem möglichst viel Leistung ins Netz speisen zu können, wird entsprechend viel Strom auf der Seite des Gleichrichters benötigt. Der netzseitige Wechselrichter hingegen ist davon nicht beeinflusst, da sich ab dem Zwischenkreis die normalen Verhältnisse einstellen. Durch einen solchen Betrieb wird üblicherweise mehr Umrichterkapazität auf der Gleichrichterseite benötigt.

Vorzugsweise umfasst die Windenergieanlage ferner einen Anlagentransformator, der mit dem zweiten Wechselspannungsnetz verbunden ist, und dazu eingerichtet ist, mit einem elektrischen Versorgungsnetz und/oder einem elektrischen Windparknetz verbunden zu werden.

Erfindungsgemäß wird ferner ein Windpark vorgeschlagen umfassend eine Vielzahl von Windenergieanlagen nach einem der vorstehenden Ansprüche und ein, die Windenergieanlagen mit einander verbindendes, elektrisches Windparknetz.

Weitere Vorteile und vorteilhafte Ausgestaltungen der Erfindung werden im Folgenden unter Verweis auf die beigefügten Figuren genauer beschrieben, wobei für gleiche oder ähnliche Bauteile oder Baugruppen dieselben Bezugszeichen verwendet werden. Hierbei zeigen:
- Fig. 1: schematisch und exemplarisch eine perspektivische Ansicht einer Windenergieanlage;
- Fig. 2: schematische und exemplarisch ein bevorzugtes Ausführungsbeispiel eines erfindungsgemäßen Leistungsstromrichters;
- Fig. 3: schematisch und exemplarisch ein bevorzugtes Ausführungsbeispiel eines Zentralumrichters.

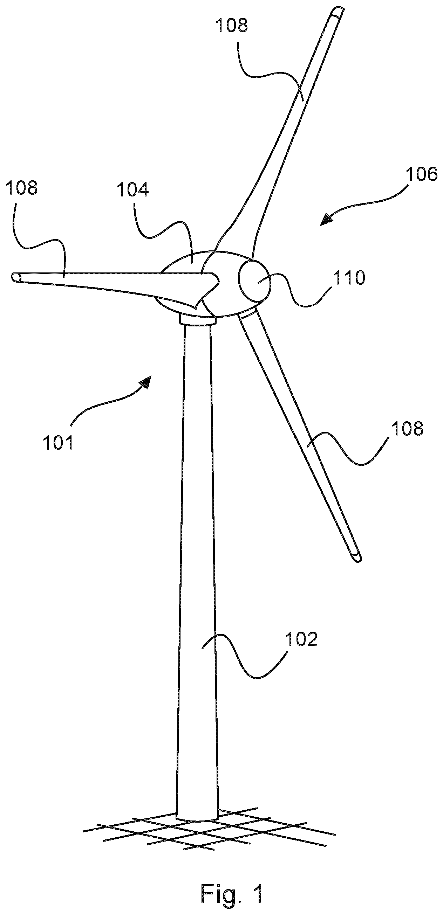

- Fig. 1: zeigt eine perspektivische Ansicht einer Windenergieanlage 100.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel an. Der Generator erzeugt hierdurch einen einzuspeisenden Strom, der mittels eines Wechselrichters in ein elektrisches Versorgungnetz eingespeist wird.

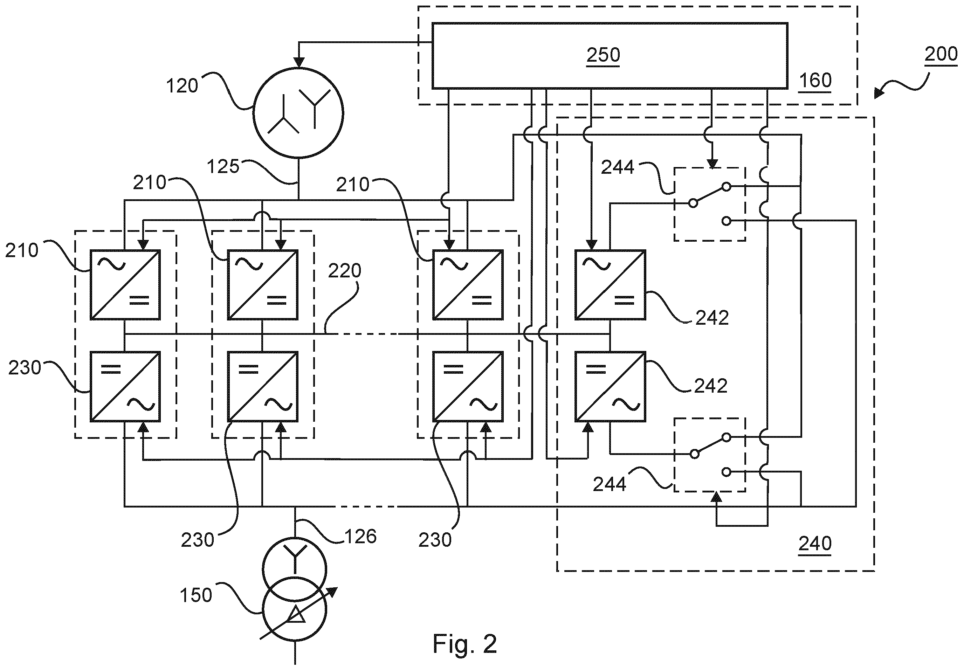

Fig. 2 zeigt schematisch und exemplarisch ein bevorzugtes Ausführungsbeispiel eines erfindungsgemäßen Leistungsstromrichters 200, insbesondere einer Windenergieanlage wie in Fig. 1 gezeigt, die mittels einer Steuerung 160 gesteuert wird.

Der Leistungsstromrichter 200 ist generatorseitig mit einem Generator 120 einer Windenergieanlage verbunden und netzseitig mit einem Windenergieanlagentransformator 150 einer Windenergieanlage verbunden, der die Windenergieanlage mit einem elektrischen Versorgungsnetz oder einem Windparknetz verbindet.

Der Leistungsstromrichter 200 umfasst eine Vielzahl von Gleichrichtern 210, einen Gleichspannungszwischenkreis 220, eine Vielzahl von Wechselrichtern 230, ein schaltbares Umrichtermodul 240 und eine Steuereinheit 250.

Die Gleichrichter 210 weist hierfür bspw. eine Leistungsklasse zwischen ca. 350kVA und ca. 700 kVA auf. Der Gleichspannungszwischenkreis weist hierfür bspw. eine Nenn-Spannung zwischen ca. 950V und ca. 1200 V auf. Die Wechselrichter 230 weist hierfür bspw. eine Leistungsklasse zwischen ca. 350kVA und ca. 700 kVA auf. Das schaltbare Umrichtermodul 240 weist hierfür bspw. eine Leistungsklasse zwischen ca. 350kVA und ca. 700 kVA auf. Besonders bevorzugt weisen die Gleichrichter 210, die Wechselrichter 230 und das schaltbare Umrichtermodul 240 im Wesentlichen dieselbe Leistungsklasse auf.

Die Vielzahl von Gleichrichter 210 sind über ein erstes Wechselspannungsnetz 125 mit dem Generator 120 verbunden und dazu eingerichtet, eine Wechselspannung in eine Gleichspannung umzuwandeln.

Der Gleichspannungszwischenkreis 220 ist zwischen den Gleichrichtern 210 und den Wechselrichtern 230 angeordnet und dazu eingerichtet, die Gleichspannung zu führen. Der Gleichspannungszwischenkreis 220 verbindet ferner die Vielzahl von Gleichrichtern 210 mit der Vielzahl von Wechselrichtern 230.

Die Vielzahl von Wechselrichtern 230 ist zudem über ein zweites Wechselspannungsnetz 126 mit dem Windenergieanlagentransformator 150 verbunden. Zudem sind die Wechselrichter 230 dazu eingerichtet, eine Gleichspannung in eine Wechselspannung umzuwandeln.

Das schaltbare Umrichtermodul 240 umfasst zwei, mit dem Gleichspannungszwischenkreis verbundene Umrichter 242 und jeweils eine, mit dem Umrichter 242 verbundene Schalteinheit 244, die mit dem ersten und dem zweiten Wechselspannungsnetz 125,125 verbindbar ist und so mit dem ersten Wechselspannungsnetz 125 verbunden werden kann, dass der Umrichter 242 als Gleichrichter ausgebildet ist, und so mit dem zweiten Wechselspannungsnetz 126 verbunden werden kann, dass der Umrichter 242 als Wechselrichter ausgebildet ist.

Das Umrichtermodul 240 weist also im Wesentlichen zwei Umrichter auf, denen eine Doppelfunktion zukommt, nämlich sowohl die eines Gleichrichters als auch die eines Wechselrichters.

Je nach Bedarf kann also, bevorzugt auch im laufenden Betrieb der Windenergieanlage, eine der beiden Funktionen mittels der Windenergieanlagensteuerung 160 bzw. einer entsprechenden Steuereinheit 250 ausgewählt werden.

Die Steuereinheit 250 ist als wenigstens dazu eingerichtet, die Schalteinheit 244 dynamisch zu schalten und/oder den Umrichter 242 als Gleichrichter und/oder als Wechselrichter zu betreiben.

In einer besonders bevorzugten Ausführungsform ist das Umrichtermodul, bevorzugt umfassend zwei Umrichter 242 und zwei Schalteinheiten 244, in einem Leistungsschrank verbaut. Dies ist durch die gestrichelten Linien angedeutet.

In einer weiteren bevorzugten Ausführungsform sind auch jeweils ein Gleichrichter 210 und ein Wechselrichter 230 als eine funktionale Einheit ausgebildet und/oder in einem Leistungsschrank verbaut. Dies ist ebenfalls durch die gestrichelten Linien angedeutet.

In weiteren Ausführungsformen weist der Leistungsstromrichter 200 auch mehrere schaltbare Umrichtermodule 240 auf.

In einer besonders bevorzugten Ausführungsform ist die Steuerung 160 dazu eingerichtet ist, das schaltbare Umrichtermodul im laufenden Betrieb der Windenergieanlage so dynamisch zu schalten, dass der Umrichter als Gleichrichter und/oder als Wechselrichter betrieben wird, insbesondere in Abhängigkeit der vorstehend beschriebenen Betriebsarten.

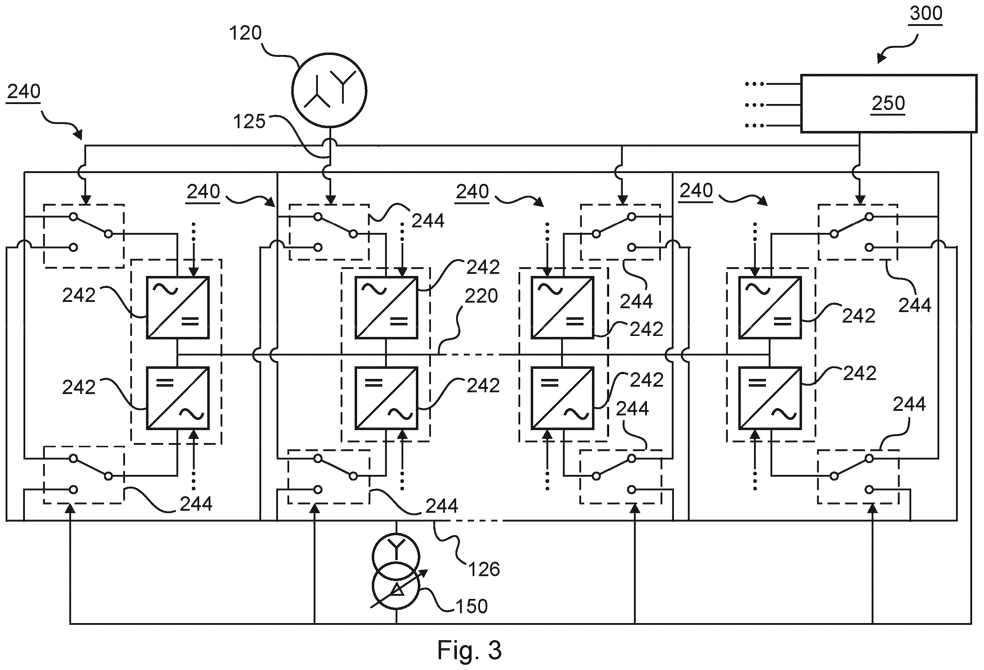

Fig. 3 zeigt schematisch und exemplarisch ein bevorzugtes Ausführungsbeispiel eines erfindungsgemäßen Zentralumrichter 300, insbesondere einer Windenergieanlage wie in Fig. 1 gezeigt, die mittels einer Steuerung 160 gesteuert wird.

Der Zentralumrichter 300 ist, wie der Leistungsstromrichter aus Fig. 2, zwischen einem Generator 120 einer Windenergieanlage, bevorzugt wie in Fig. 1 gezeigt, und einem Windenergieanlagentransformator 150 angeordnet.

In einer besonders bevorzugten Ausführungsform ist der Zentralumrichter 300 als Vollumrichter einer Windenergieanlage ausgebildet.

Der Zentralumrichter umfasst eine Vielzahl von schaltbaren Umrichtermodulen 240, wie vorstehend beschrieben.

Jedes schaltbare Umrichtermodul 240 umfasst dabei zwei, mit einem Gleichspannungszwischenkreis 220 verbundenen Umrichter 242 und jeweils eine, mit dem Umrichter 242 verbundene Schalteinheit 244, die mit einem ersten und einem zweiten Wechselspannungsnetz 125, 126 verbindbar ist und so mit dem ersten Wechselspannungsnetz 125 verbunden werden kann, dass der Umrichter 242 als Gleichrichter ausgebildet ist, und so mit dem zweiten Wechselspannungsnetz 126 verbunden werden kann, dass der Umrichter 242 als Wechselrichter ausgebildet ist.

## Patentansprüche

1. Leistungsstromrichter (200), insbesondere einer Windenergieanlage (100) zum Einspeisen einer elektrischen Leistung in ein elektrisches Versorgungsnetz, wenigstens umfassend:
- eine Vielzahl von Gleichrichtern (210), die mit einem ersten Wechselspannungsnetz (125) verbindbar sind, um eine erste Wechselspannung in eine Gleichspannung umzuwandeln,
- einen, mit der Vielzahl von Gleichrichtern (210) verbundenen Gleichspannungszwischenkreis (220), der dazu eingerichtet ist, die Gleichspannung zu führen und
- eine Vielzahl von Wechselrichtern (230), die mit dem Gleichspannungszwischenkreis (220) verbunden sind und mit einem zweiten Wechselspannungsnetz (126) verbindbar sind, um die Gleichspannung in zweite Wechselspannung (126) umzuwandeln,
**dadurch gekennzeichnet,**
**dass** der Leistungsstromrichter (200) ferner umfasst:
- ein schaltbares Umrichtermodul (240), wenigstens umfassend:
- einen, mit dem Gleichspannungszwischenkreis (220) verbundenen Umrichter (242) und
- eine, mit dem Umrichter (242) verbundene Schalteinheit (244), die
- mit dem ersten und dem zweiten Wechselspannungsnetz (126) verbindbar ist und
- so mit dem ersten Wechselspannungsnetz (125) verbunden werden kann, dass der Umrichter (242) als Gleichrichter (210) ausgebildet ist, und
- so mit dem zweiten Wechselspannungsnetz (126) verbunden werden kann, dass der Umrichter (242) als Wechselrichter (230) ausgebildet ist.

2. Leistungsstromrichter (200) nach Anspruch 1, ferner umfassend:
- eine Steuereinheit (250), die dazu eingerichtet ist, die Schalteinheit (244) dynamisch zu schalten und/oder den Umrichter (242) als Gleichrichter (210) und als Wechselrichter (230) zu betreiben.

3. Leistungsstromrichter (200) nach Anspruch 1 oder 2, wobei
- das schaltbare Umrichtermodul (240), insbesondere genau, zwei Umrichter (242) und zwei Schalteinheiten (244) aufweist, wobei die Umrichter (242) zeitgleich als Gleichrichter (210) und/oder Wechselrichter (230) betreibbar sind.

4. Leistungsstromrichter (200) nach einem der vorstehenden Ansprüche, wobei
- der Leistungsstromrichter (200) wenigstens ein weiteres schaltbares Umrichtermodul (240) umfasst.

5. Leistungsstromrichter (200) nach einem der vorstehenden Ansprüche, ferner umfassend:
- eine Vielzahl von Drosseln, die dieselbe Größenordnung aufweisen.

6. Zentralumrichter (300) einer Windenergieanlage (100), umfassend
- eine Vielzahl von schaltbaren Umrichtermodulen (240),
**dadurch gekennzeichnet,**
**dass** jedes schalt-
bare Umrichtermodul (240) wenigstens umfasst:
- einen, mit einem Gleichspannungszwischenkreis (220) verbundenen Umrichter (242) und
- eine, mit dem Umrichter (242) verbundene Schalteinheit (244), die
- mit einem ersten und einem zweiten Wechselspannungsnetz (126) verbindbar ist und
- so mit dem ersten Wechselspannungsnetz (125) verbunden werden kann, dass der Umrichter (242) als Gleichrichter (210) ausgebildet ist, und
- so mit dem zweiten Wechselspannungsnetz (126) verbunden werden kann, dass der Umrichter (242) als Wechselrichter (230) ausgebildet ist.

7. Windenergieanlage (100), wenigstens umfassend:
- einen Generator (120) zum Erzeugen einer Wechselspannung,
- einen Leistungsstromrichter (200) oder einen Zentralumrichter (300) nach einem der vorstehenden Ansprüche, der mit dem Generator (120) verbunden ist, und
- eine Steuerung (160), die dazu eingerichtet ist, das schaltbare Umrichtermodul (240) im laufenden Betrieb der Windenergieanlage (100) so dynamisch zu schalten, dass der Umrichter (242) als Gleichrichter (210) und/oder als Wechselrichter (230) betrieben wird.

8. Windenergieanlage (100) nach Anspruch 7, wobei
- die Windenergieanlage (100) unterschiedliche Betriebsarten aufweist, und wobei die Steuerung (160) in Abhängigkeit dieser Betriebsarten das schaltbare Umrichtermodul (240) schaltet.

9. Windenergieanlage (100) nach Anspruch 8, wobei
- die Betriebsarten wenigstens einen schalloptimierten Betrieb und/oder einen Netzfehlerbetrieb umfassen.

10. Windenergieanlage (100) nach einem der Ansprüche 7 bis 9, ferner umfassend:
- einen Anlagentransformator, der mit dem zweiten Wechselspannungsnetz (126) verbunden ist, und dazu eingerichtet ist, mit einem elektrischen Versorgungsnetz und/oder einem elektrischen Windparknetz verbunden zu werden.

11. Windpark umfassend eine Vielzahl von Windenergieanlagen (100) nach einem der Ansprüche 7 bis 10 und ein, die Windenergieanlagen (100) mit einander verbindendes, elektrisches Windparknetz.

## Claims

1. A power converter (200), in particular of a wind power installation (100) for feeding electrical power into an electrical supply network, at least comprising:
- a multiplicity of rectifiers (210) which can be connected to a first alternating voltage network (125), in order to convert a first alternating voltage into a direct voltage,
- a direct voltage intermediate circuit (220) which is connected to the multiplicity of rectifiers (210) and which is set up to carry the direct voltage and
- a plurality of inverters (230) which are connected to the direct voltage intermediate circuit (220) and can be connected to a second alternating voltage network (126), in order to convert the direct voltage into second alternating voltage (126),
**characterized in that**
the power converter (200) further comprises:
- a switchable converter module (240), at least comprising:
- a converter (242) which is connected to the direct voltage intermediate circuit (220) and
- a switching unit (244) which is connected to the converter (242) and which
- can be connected to the first and the second alternating voltage network (126) and
- can be connected to the first alternating voltage network (125) in such a manner that the converter (242) is designed as a rectifier (210), and
- can be connected to the second alternating voltage network (126) in such a manner that the converter (242) is designed as an inverter (230).

2. The power converter (200) as claimed in claim 1, further comprising:
- a control unit (250) which is set up to dynamically switch the switching unit (244) and/or to operate the converter (242) as a rectifier (210) and as an inverter (230).

3. The power converter (200) as claimed in claim 1 or 2, wherein
- the switchable converter module (240) has, in particular precisely, two converters (242) and two switching units (244), wherein the converters (242) can be operated simultaneously as rectifiers (210) and/or inverters (230).

4. The power converter (200) as claimed in one of the preceding claims, wherein
- the power converter (200) comprises at least one further switchable converter module (240).

5. The power converter (200) as claimed in one of the preceding claims, further comprising:
- a multiplicity of chokes which are the same order of magnitude.

6. A central converter (300) of a wind power installation (100), comprising
- a multiplicity of switchable converter modules (240),
**characterized in that**,
that each switchable converter module (240) at least comprises:
- a converter (242) which is connected to a direct voltage intermediate circuit (220) and
- a switching unit (244) which is connected to the converter (242) and which
- can be connected to a first and a second alternating voltage network (126) and
- can be connected to the first alternating voltage network (125) in such a manner that the converter (242) is designed as a rectifier (210), and
- can be connected to the second alternating voltage network (126) in such a manner that the converter (242) is designed as an inverter (230).

7. A wind power installation (100), at least comprising:
- a generator (120) for generating an alternating voltage,
- a power converter (200) or a central converter (300) as claimed in one of the preceding claims which is connected to the generator (120), and
- a control system (160) which is set up to dynamically switch the switchable converter module (240) during ongoing operation of the wind power installation (100) in such a manner that the converter (242) is operated as a rectifier (210) and/or as an inverter (230).

8. The wind power installation (100) as claimed in claim 7, wherein
- the wind power installation (100) has different operating modes, and wherein the control system (160) switches the switchable converter module depending on these operating modes (240).

9. The wind power installation (100) as claimed in claim 8, wherein
- the operating modes comprise at least sound-optimized operation and/or network error operation.

10. The wind power installation (100) as claimed in claims 7 to 9, further comprising:
- an installation transformer which is connected to the second alternating voltage network (126) and is set up to be connected to an electrical supply network and/or an electrical wind farm network.

11. A wind farm comprising a multiplicity of wind power installations (100) as claimed in claims 7 to 10 and an electrical wind farm network which connects the wind power installations (100) to one another.

## Revendications

1. Convertisseur de puissance (200), en particulier d'une éolienne (100), destiné à injecter une puissance électrique dans un réseau d'alimentation électrique, comprenant au moins :
- une pluralité de redresseurs (210) qui peuvent être reliés à un premier réseau de tension alternative (125) pour convertir une première tension alternative en une tension continue,
- un circuit intermédiaire de tension continue (220) relié à la pluralité de redresseurs (210) qui est mis au point pour conduire la tension continue et
- une pluralité d'onduleurs (230) qui sont reliés au circuit intermédiaire de tension continue (220) et qui peuvent être reliés à un deuxième réseau de tension alternative (126) pour convertir la tension continue en une deuxième tension alternative (126),
**caractérisé en ce que** le convertisseur de puissance (200) comprend en outre :
- un module convertisseur commutable (240), comprenant au moins :
- un convertisseur (242) relié au circuit intermédiaire de tension continue (220) et
- une unité de commutation (244) reliée au convertisseur (242) qui
- peut être reliée au premier et au deuxième réseau de tension alternative (126) et
- peut être reliée au premier réseau de tension alternative (125) de telle sorte que le convertisseur (242) est réalisé comme un redresseur (210), et
- peut être reliée au deuxième réseau de tension alternative (126) de telle sorte que le convertisseur (242) est réalisé comme un onduleur (230).

2. Convertisseur de puissance (200) selon la revendication 1, comprenant en outre :
- une unité de commande (250) qui est mise au point pour commuter dynamiquement l'unité de commutation (244) et/ou faire fonctionner le convertisseur (242) en tant que redresseur (210) et en tant qu'onduleur (230).

3. Convertisseur de puissance (200) selon la revendication 1 ou 2, dans lequel
- le module convertisseur commutable (240) présente en particulier précisément deux convertisseurs (242) et deux unités de commutation (244), dans lequel les convertisseurs (242) peuvent fonctionner simultanément en tant que redresseur (210) et/ou onduleur (230).

4. Convertisseur de puissance (200) selon l'une quelconque des revendications précédentes, dans lequel
- le convertisseur de courant de puissance (200) comprend au moins un autre module convertisseur commutable (240).

5. Convertisseur de puissance (200) selon l'une quelconque des revendications précédentes, comprenant en outre :
- une pluralité de bobines de même ordre de grandeur.

6. Onduleur central (300) d'une éolienne (100), comprenant
- une pluralité de modules convertisseurs (240) commutables,
**caractérisé en ce que** chaque module convertisseur (240) commutable comprend au moins :
- un convertisseur (242) relié à un circuit intermédiaire de tension continue (220) et
- une unité de commutation (244) reliée au convertisseur (242) qui
- peut être reliée à un premier et à un deuxième réseau de tension alternative (126) et
- peut être reliée au premier réseau de tension alternative (125) de telle sorte que le convertisseur (242) est réalisé comme un redresseur (210), et
- peut être reliée au deuxième réseau de tension alternative (126) de telle sorte que le convertisseur (242) est réalisé comme un onduleur (230).

7. Éolienne (100), comprenant au moins :
- un générateur (120) pour générer une tension alternative,
- un convertisseur de puissance (200) ou un convertisseur central (300) selon l'une quelconque des revendications précédentes qui est relié au générateur (120), et
- une commande (160) qui est mise au point pour commuter dynamiquement le module convertisseur (240) commutable lors du fonctionnement de l'éolienne (100) de telle sorte que le convertisseur (242) fonctionne en tant que redresseur (210) et/ou en tant qu'onduleur (230).

8. Éolienne (100) selon la revendication 7, dans laquelle
- l'éolienne (100) présente différents modes de fonctionnement, et dans laquelle l'unité de commande (160) commute le module de convertisseur (240) commutable en fonction desdits modes de fonctionnement.

9. Éolienne (100) selon la revendication 8, dans laquelle
- les modes de fonctionnement comprennent au moins un fonctionnement à bruit optimisé et/ou un fonctionnement en défaut réseau.

10. Éolienne (100) selon l'une quelconque des revendications 7 à 9, comprenant en outre :
- un transformateur d'installation qui est relié au deuxième réseau de tension alternative (126) et qui est mis au point pour être relié à un réseau d'alimentation électrique et/ou à un réseau électrique de parc éolien.

11. Parc éolien comprenant une pluralité d'éoliennes (100) selon l'une quelconque des revendications 7 à 10 et un réseau électrique de parc éolien reliant les éoliennes (100) entre elles.
